Europäisches Patentamt

European Patent Office

Office européen des brevets

(11) Publication number : **0 501 805 A1**

# (12) EUROPEAN PATENT APPLICATION

(21) Application number : 92301675.2

(22) Date of filing : 27.02.92

(51) Int. Cl.$^5$ : **H01G 9/02**

(30) Priority : **01.03.91 JP 34940/91**

(43) Date of publication of application :
**02.09.92 Bulletin 92/36**

(84) Designated Contracting States :
**DE FR GB**

(71) Applicant : **NEC CORPORATION**
**7-1, Shiba 5-chome Minato-ku**
**Tokyo 108-01 (JP)**

(72) Inventor : **Saiki, Yoshihiko**
**c/o NEC Corporation 7-1 Shiba 5-chome**
**Minato-ku, Toky 108-01 (JP)**
Inventor : **Tsuchida, Eishun**
**10-10, Sekimachi-minami, 2-chome**
**Nerima-ku, Tokyo (JP)**
Inventor : **Takeoka,Shinji**
**1-3-19-210, Nishiwaseda,**
**Shinjuku-ku, Tokyo (JP)**
Inventor : **Yamamoto, Kimihisa**
**Nakatsu Haitsu 202, 26-6, Arai 4-chome**
**Nakano-ku, Tokyo (JP)**

(74) Representative : **Abnett, Richard Charles et al**
**REDDIE & GROSE 16 Theobalds Road**
**London WC1X 8PL (GB)**

(54) **Method of manufacturing solid-state electrolytic capacitor.**

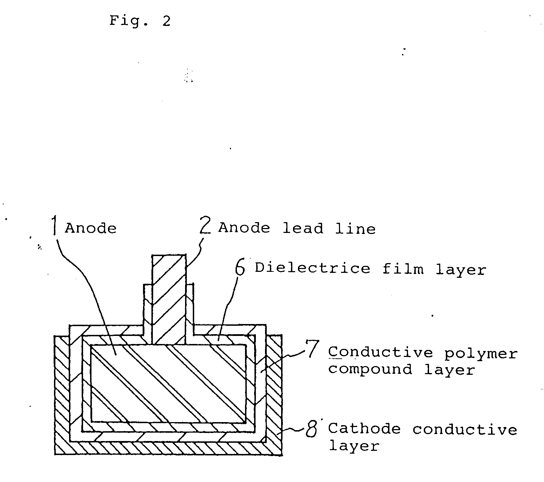

(57)    An anode (1) molded of tantalum powder is
dipped into an electrolyte (3) containing pyrrole
monomer and water which is kept to pH 7 or
below. When a positive potential is applied to
the anode and negative potential to a cathode
(5), electrolytically oxidative polymerization and
anodic oxidation will respectively take place on
pyrrole and the anode at the same time to form
tantalum pentoxide film as a dielectric film layer
(6 ; Fig.2) and a polypyrrole layer as a conduc-
tive polymer compound (7) on the surface of the
anode at the same time.

Fig. 1

EP 0 501 805 A1

## BACKGROUND OF THE INVENTION

Field of the Invention

The present invention relates to a method of manufacturing a solid-state electrolytic capacitor, and more particularly, a method of manufacturing a solid-state electrolytic capacitor which uses a conductive polymer compound as a solid-state electrolyte.

Description of the Related Art

According to a conventional method of manufacturing a solid-state electrolytic capacitor, a sintered material with an anodic oxide film or an etching foil is impregnated with a manganese nitrate solution, followed by thermal decomposition, thus producing manganese dioxide as a solid-state electrolyte. Using this method, however, a high temperature and nitrogen gas, etc. caused in the thermal decomposition damage the anodic oxide film, lowering the withstand voltage and increasing the leakage current. Since manganese dioxide produced by the conventional method is porous, the electrolytic capacitor with this manganese dioxide has insufficient conductivity and a high-frequency response inferior to those of a ceramic capacitor and a film capacitor.

As a solution to these shortcomings, an attempt has been made to use a conductive polymer compound, for example, polypyrrole as a solid-state electrolyte.

There are two methods of forming a conductive polymer compound on an anode having fine pores: a chemically oxidative polymerization method and an electrolytically oxidative polymerization method.

The chemically oxdative polymerization method produces a conductive polymer compound with lower conductivity and requires more time to produce the same, compared with the electrolytically oxidative polymerization method.

Using the electrolytically oxidative method, since an anodic oxide film is an insulator, it is difficult to let a current flow therethrough. A conductive polymer compound with an even and sufficient thickness cannot therefore be produced.

To solve these problems, a method has been proposed, which forms a thin conductive polymer compound film on an anodic oxide film by the chemically oxidative polymerization method, and causes a side electrode for electrolytically oxidative polymerization to touch this polymer compound film to form an electrolytically oxidative polymerization film.

This proposed method of manufacturing a solid-state electrolytic capacitor however requires that a needle-shaped electrode should contact an individual electrolytic capacitor element. This method therefore requires many steps, and may damage the anodic oxide film.

## SUMMARY OF THE INVENTION

According to the present invention, there is provided a method of manufacturing a solid-state electrolytic capacitor including an anode, a dielectric oxide film formed on a surface of the anode and a layer of a conductive polymer compound formed on a surface of the dielectric film, the method comprising the steps of dipping the anode in a monomer solution for forming the conductive polymer compound through polymerization; and applying a positive potential to the anode and a negative potential to the monomer solution to effect electrolytic oxidation, thereby forming the dielectric anodic oxide film and the layer of the conductive polymer compound at the same time.

## BRIEF DESCRIPTION OF THE DRAWINGS

Fig. 1 is an exemplary diagram illustrating an electrolytic oxidation method according to a method of manufacturing a solid-state electrolytic capacitor according to one embodiment of the present invention;

Fig. 2 is a cross-sectional view of a solid-state electrolytic capacitor produced by the manufacturing method according to the embodiment of the present invention;

Fig. 3A is a graph showing a relationship between a hydrogen ion activity (pH) and oxidation potentials of tantalum and pyrrole; and

Fig. 3B is a graph showing a relationship between a hydrogen ion activity (pH) and the amounts of tantalum pentoxide and polypyrrole produced.

## DETAILED DESCRIPTION OF THE PREFERRED EMBODIMENT

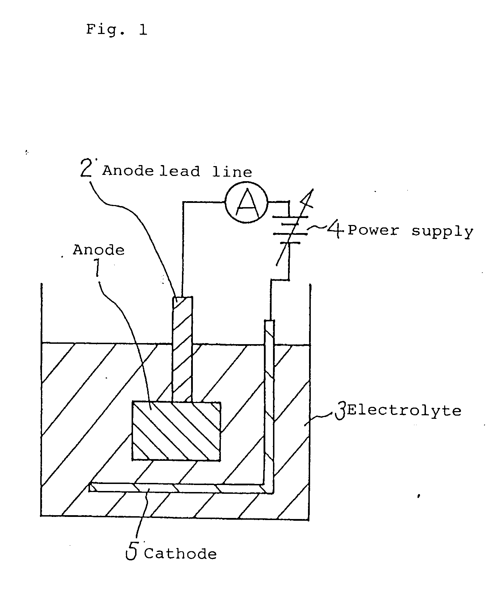

The most preferable embodiment of the present invention will now be described referring to the accompanying drawings. Fig. 1 is an exemplary diagram illustrating a method of manufacturing a solid-state electrolytic capacitor according to this embodiment of the present invention. Fig. 2 is a cross section of the essential parts of the solid-state electrolytic capacitor produced by the manufacturing method of this embodiment.

In this embodiment, an anode lead line 2 made of a tantalum wire is first connected to an anode 1 which is molded of 100 mg of tantalum metal powder. Then, as shown in Fig. 1, the anode 1 is dipped into an electrolyte 3 of pH 2, a solution containing 0.5 mol/liter of pyrrole and 0.1 mol/liter of potassium chloride. With the positive pole of a power supply 4 connected to the anode lead line 2 and the negative pole thereof connected to a platinum plate as a cathode 5, electrolytic oxidation is performed. Through this process, a dielectric film 6 of tantalum pentoxide ($Ta_2O_5$) and a conductive polymer compound layer 7 of polypyrrole are formed at the same time on the surface of the anode 1. pH of the solution was adjusted with a buffer solution. A current with a density of 3 mA/cm$^2$ was supplied from the power supply 4 in this case. In this embodiment, the current supply continued for one hour, providing a tantalum pentoxide film of about 50 nm and a black polypyrrole layer of about 30 μm at the same time.

The reason why the tantalum-pentoxide film and the polypyrrole layer can be formed at a time will be explained below.

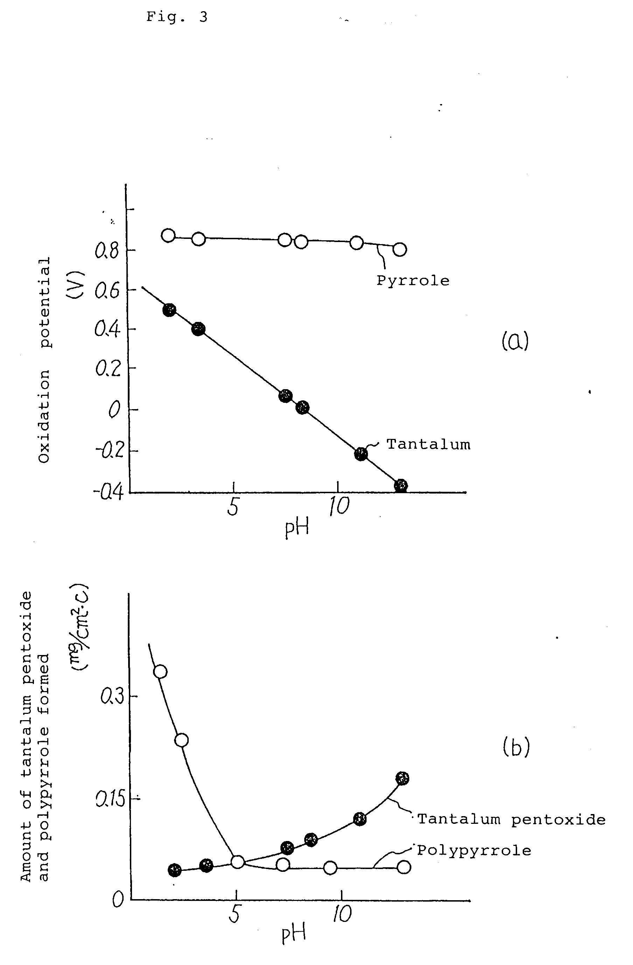

As shown in Fig. 3A, when pH of the electrolyte rises, the oxidation potential of the tantalum pentoxide drops to accelerate the formation of an oxide on a tantalum electrode. The oxidation potential of pyrrole is almost constant, not dependent on pH. It is therefore possible to form tantalum pentoxide and polypyrrole at the same time in a low pH range. If pH value exceeds 5, however, the rate of tantalum pentoxide production accelerates and polypyrrole is scarcely formed, as shown in Fig. 3B. If the concentration of pyrrole was raised to 10 mol/liter, however, the polypyrrole production rate would accelerate. It is therefore possible to form tantalum pentoxide and polypyrrole at the same time if pH of the electrolyte does not exceed 7.

Next, a cathode conductive layer 8 of graphite, a silver paste or the like was formed by a well-known method, providing a tantalum solid-state electrolytic capacitor with a 10-μF electrostatic capacity.

The following table shows the differences between the tantalum solid-state electrolytic capacitor of this embodiment and those manufactured by conventional methods, in the dielectric loss tangent (hereafter referred to as "tan δ"), leakage current (hereafter referred to as "L·C") and electrostatic capacity (hereafter referred to as "C").

| Manufacturing Method | tan δ (%) | L·C (μA) | C (μF) |
|---|---|---|---|
| This Embodiment | 1.5 | 0.01 | 9.6 |
| Conventional Method A | 3.2 | 0.3 | 9.8 |
| Conventional Method B | 4.0 | 0.01 | 9.8 |
| Conventional Method C | Shorted | Shorted | Shorted |

A conventional method A in the table is a method of forming manganese dioxide after performing a normal anodization. In a conventional method B a polypyrrole layer is formed instead of manganese dioxide by a chemically oxidative polymerization method. A conventional method C is a method of forming a polypyrrole layer by an electrolytically oxidative polymerization method. In the chemically oxidative polymerization, the anodized anode 1 is dipped into a polyvinyl alcohol solution containing ferric chloride of 3 % by weight, followed by contact with pyrrole steam for 48 hours, thereby yielding a polypyrrole layer having the same thickness as that layer in this embodiment. Values shown in the table each refer to an average of the measured values of each 20 capacitors manufactured by the respective methods.

As apparent from the table, though the capacitor according to the embodiment has an electrostatic capacity slightly smaller than those of the capacitors provided by the conventional methods A and B, the other characteristics are superior. The capacitor by the conventional method B has larger tan δ because the polypyrrole layer formed by the chemically oxidative polymerization method is porous. In the case of the capacitor of the method C which performs electrolytically oxidative polymerization after forming a dielectric film, since the electrolytically oxidative polymerization is not performed until the dielectric film is broken, the leakage current (L·C) significantly increases, causing a short-circuit in the capacitor.

The anode to be used in the present invention may be made of any metal as long as the metal forms a stable dielectric film. Preferred metals include, for example, aluminum and niobium besides tantalum.

While potassium chloride is used as a supporting electrolyte in this embodiment, alkali salts may also be used instead, such as sodium chloride, potassium nitrate, sodium p-toluenesulfonate and potassium p-toluenesulfonate. The dielectric film and polypyrrole can be formed at the same time without using such a supporting electrolyte, though tan δ slightly increases.

As described above, according to the illustrated embodiment, a dielectric film layer and a conductive polymer compound can be formed at the same time, reducing the number of manufacturing steps and thus simplifying the manufacturing procedures. It is further possible to form a fine, well conductive polymer compound through electrolytic oxidation, without damaging the dielectric film. The present method therefore can produce a solid-state electrolytic capacitor with a low leakage current and dielectric loss at a low price.

## Claims

1. A method of manufacturing a solid-state electrolytic capacitor including an anode, a dielectric oxide film formed on a surface of the anode and a layer of a conductive polymer compound formed on a surface of the dielectric film, the method comprising the steps of:

   dipping the anode in a monomer solution for forming the conductive polymer compound through polymerization; and

   applying a positive potential to the anode and a negative potential to the monomer solution to effect electrolytic oxidation, thereby forming the dielectric film and the layer of the conductive polymer compound at the same time.

2. A method according to claim 1, wherein the solution contains-pyrrole.

3. A method according to claim 2, wherein the solution containing pyrrole has hydrogen ion activity of 7 or below.

4. A method according to claim 2 or 3, wherein the solution containing pyrrole contains a supporting electrolyte.

5. A method according to claim 4, wherein the supporting electrolyte is an alkali salt.

6. A method according to claim 5, wherein the alkali salt is any one of potassium chloride, sodium chloride, potassium nitrate, sodium p-toluenesulfonate and potassium p-toluenesulfonate.

7. A solid-state electrolytic capacitor made by the method of any of claims 1 to 6.

8. A solid-state electrolytic capacitor comprising an anode (1), a dielectric oxide (6) and a conductive polymer compound (7) simultaneously formed on the anode, and a cathode conductive layer formed thereon.

Fig. 1

2 Anode lead line

Anode
1

4 Power supply

3 Electrolyte

5 Cathode

Fig. 2

1 Anode      2 Anode lead line

6 Dielectrice film layer

7 Conductive polymer
compound layer

8 Cathode conductive
layer

Fig. 3

(a)

(b)

**European Patent Office**

## EUROPEAN SEARCH REPORT

Application Number

EP 92 30 1675

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 342 998 (SANYO ELECTRIC CO LTD)<br>* column 2, line 6 - line 13 *<br>* column 3, line 19 - column 4, line 8 *<br>* examples 1-4 *<br>--- | 1-5,7 | H01G9/02 |
| X | DE-A-3 811 415 (MATSUSHITA ELECTRIC IND CO LTD)<br><br>* column 6, line 45 - line 59 *<br>* column 8, line 7 - line 21 *<br>* example 5 *<br>--- | 1-2,5,<br>7-8 | |
| A | EP-A-0 336 299 (MATSUSHITA ELECTRIC IND CO LTD)<br>* page 8, line 5 - line 12 *<br><br>----- | 6 | |
| | | | **TECHNICAL FIELDS SEARCHED (Int. Cl.5 )**<br><br>H01G |

The present search report has been drawn up for all claims

| Place of search | Date of completion of the search | Examiner |
|---|---|---|
| THE HAGUE | 09 APRIL 1992 | SCHUERMANS N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)